# EUROPEAN PATENT SPECIFICATION

(11) **EP 2 155 367 B1**
(45) Date of publication and mention of the grant of the patent: **26.10.2011**
(21) Application number: 08750769.5
(22) Date of filing: 23.05.2008
(51) Int. Cl.: B01D 63/06, B01D 71/02, B01D 67/00, B01D 69/10

(54) **MEMBRANE MODULE AND ITS USE**
MEMBRANMODUL UND DESSEN VERWENDUNG
MODULE DE MEMBRANE ET SON UTILISATION

(30) Priority: 30.05.2007 GB 0710265
(43) Date of publication of application: 24.02.2010
(73) Proprietor: Phoenix IPR Limited, Kent DA14 6BS (GB)
(72) Inventor: BRATTON, Graham, John, Kent DA15 9EB (GB); MURTON, Colin Danny, Hampshire GU35 8QU (GB)
(74) Representative: Lucas, Brian Ronald
(86) International application number: PCT/GB2008/050374
(87) International publication number: WO 2008/146037

(56) References cited:
- EP-A- 0 787 524
- WO-A-00/20105
- US-A1- 2003 155 290
- US-A1- 2006 090 649
- US-B1- 6 716 275

## Description

### FIELD OF THE INVENTION

This invention relates to a module comprising a multiplicity of supports or monoliths, having a Zeolite membrane on internal surfaces thereof and to the removal of water from organic liquids and/or the purification of water e.g. from a contaminated stream.

### BACKGROUND TO THE INVENTION

US-A-5362522 (Bratton et al.*,* the disclosure of which is incorporated herein by reference) is concerned with the production of membranes and discloses that although there had at the time been extensive research in the field of zeolite membranes, there had been no previous disclosure by which a zeolite membrane having a continuous layer of zeolite directly connected to the surface of a support could be prepared. There was therefore provided a process for the production of a membrane comprising a film of a crystalline material which is a molecular sieve with a crystal structure made up of tetrahedra joined together through oxygen atoms to produce an extended network with conduits of molecular dimensions, said film being formed over the pores of a porous support. The process comprised (a) immersing at least one surface of said porous support in a mixture including a synthesis gel which was capable of crystallising to produce the crystalline material; (b) inducing crystallization of said gel so that said material crystallized on the support; (c) removing the support having a film of said crystalline material from the remaining mixture: and (d) repeating these steps one or more times to obtain a membrane in which the material was crystallized directly from the support and bonded directly to the support.

US-A-5554286 (Okamoto et al.*, Mitsui*; see also the equivalent EP-A-0659469 now withdrawn; the disclosure of these specifications is incorporated by reference) discloses a membrane with sufficient permeation rates and separating factors for liquid mixture separation to be used in pervaporation or vapor permeation. It comprised a porous support, seed crystals held on a surface of said support, said seed crystals having an average particle size of 1-5µm and being held on the surface of the support in an amount of 0.5-5.0 mg/cm², and an A-type zeolite film (e.g. zeolite A4) deposited on said porous support after the seed crystals are held thereon. A preferred porous support is Al₂O₃ - SiO₂ ceramic material containing Al₂O₃ 30-80 wt % which has an average pore diameter of 0.1-2 µm, and a porosity of 30-50%. No restrictions are imposed on the shape of the porous support. However, that used for the pervaporation or vapor permeation should be in the form of pipe 20-100 cm long, about 10-30 mm in outside diameter, and 0.2 mm to several mm in thickness. It could also be in the form of cylinder, 20-100 cm long, 30-100 mm in outside diameter, and 0.2 mm to several mm in thickness, having a plurality of holes or conduits 2-12 mm inside diameter arranged parallel in the axial direction. In an experiment there was used a tubular porous alumina support "Multipoaron" made by Mitsui Kensaku-Toishi Co., Ltd. and measuring 1 cm in outside diameter, 20 cm long, 1 mm thick, 1 µm in pore diameter, and 40% porosity. The support was brush coated with zeolite 4A seed crystals of particle size < 345µm (200 mesh) followed by hydrothermal synthesis to form a membrane which was used for separation of water-ethanol mixture by the pervaporation method or vapor permeation.

US-A-6635594 (Bratton et al.*,* the disclosure of which is incorporated herein by reference, see also WO 00/21628) is concerned with the pre-treatment of tubular conduits to promote membrane formation. In particular, it discloses a method of treating a porous substrate which has tubular conduits formed within it, which method comprises mixing together zeolite particles of different size distributions having a diameter of between 20 µm and 0.1 µm to form a suspension of the particles, passing the suspension of zeolite particles down through the tubular conduits and out through the walls of the tubular conduits so as to deposit a layer of zeolite particles on the inner surface of the tubular conduits. In an embodiment, pulverized zeolite particles are mixed with unground particles to obtain the mixture of zeolite particles used for pre-treatment. In order to bring about deposition periods of flow of the suspension along the tubular conduits alternate with periods of cross-flow in which suspending liquid passes through the walls of the tubular conduits.

US-A-5935440 (Bratton et al.*,* the disclosure of which is incorporated herein by reference) relates to zeoli tic membranes. It is concerned with the problem of avoiding small membrane defects or pinholes which can have a marked deleterious effect on the performance of a membrane and can render it of little value for many purposes. This is because in many separation operations the effect of defects is essentially to provide a route through which the unseparated products can pass. It further explains that some existing methods claim that a defect free membrane is obtained on a laboratory scale, but that attempts to provide a substantially defect free membrane on a larger scale have proved unsuccessful. The disclosed solution is to treat a membrane comprising a film of a crystalline zeo-type material on a porous support of ceramics or other material and formed by any method, for example by crystallisation from a gel or solution, by plasma deposition or by any other method such as electro deposition of crystals on conducting substrates e.g. as described in DE 4109037 with a silicic acid and/or polysilicic acid or a mixture of silicic and/or poysilicic acids. By silicic acid is meant monosilicic, low, medium and high molecular weight polysilicic acids and mixtures thereof.

Methods of making silicic acids are described in GB Patent Application 2269377 (Bratton et al.*,* the disclosure of which is incorporated herein by reference). A preferred method is by acidification of a sodium silicate solution followed by separation of the silicic acid by phase separation using an organic solvent such as tetrahydrofuran. The organic phase can then be dried and anhydrous silicic acid separated e.g. by addition of *n*-butanol to obtain a substantially anhydrous solution of silicic acid. The degree of polymerisation of the silicic acid depends on the actual conditions used e.g. the time the sodium silicate solution is in contact with the acid before addition of the organic solvent, temperature etc. The silicic acid used preferably has an average molecular weight in the range of 96 to 10,000 and more preferably of 96 to 3220. The structure of the polysilicic acid may be linear and/or cyclic, including fused cyclic, chains of Si-O- groups such as ones in cube or fused cube arrangements with at least one e.g. 1-10 such as 2-6 fused cubes in a linear or non linear spatial distribution. Each cube has a silicon atom at each corner or bridge and an oxygen atom between each silicon atom, and one hydroxyl group on each silicon corner atom. The cubes may be joined together by at least one Si-O-Si bond but are preferably fused together with a common plane of a ring of 4 -Si-0- groups. Generally the polysilicic acids may have the fomula(SiO)₄ₐ(SiO)_{4b}(OH)_{c}, where a is 1, b is 0 - 6 e.g. 1 - 4 and c is an integer so that spare valencies on silicon atoms can be satisfied and is usually such that c/2 is an integer of 4 - 8 especially 4 or 5. A preferred polysilicic acid is one of molecular weight 792, with 2 fused cubes of SiO groups and 8 corner OH groups and is of formulaS₁₂O₂₀(OH)₈. The polysilicic acids are stable e.g. for up to 6 months, in the absence of acids or bases and water, and are usually stabilised in polar organic solvent concentrates by the presence of the solvent which may solvate them.

US - 6716275 B discloses porous supports internally coated will zeolite membranes and having glazed ends for sealing purposes.

International patent publication WO 00/20105 (Bratton et al.*,* the disclosure of which is incorporated herein by reference) discloses that a commonly used membrane structure for separating two components consists of a tubular membrane with the mixture being passed down the tube, a separated component passing through the membrane and the other component or mixture of components passing down the tube. The tube can be bent so that it is in the form of a continuous zigzag or other convoluted or similar configuration to increase the surface area of the tube contained in a module. With ceramic membranes it is cost efficient and convenient to form a plurality of tubes together in the form of a monolith. Hence monolithic assemblies of tubes have been developed wherein a single, tubular body comprises a multiplicity of smaller conduits, this permitting a higher total flow area and hence relatively high throughput at relatively low pressure drop while keeping the individual flow channels relatively small so that flow conditions within them remain turbulent. The disclosed invention is based on a finding that a particular arrangement of tubular membranes gave unexpectedly superior results for zeolite membranes in pervaporation over what would have been expected, and comprised a tubular porous ceramic monolith having at least four tubular conduits formed within the monolith with a zeolite membrane formed on the internal surface of the conduits the zeolite membranes having an internal diameter of 5 to 9 mm preferably 6.4 mm and the ceramic monolith having an outer diameter of 20 to 25 mm, preferably 20mm. The only disclosed method for pre-treatment of the conduits within the monolith with zeolite-initiating agent was by loading an appropriate sized pipe cleaner with zeolite 4A particles, inserting the pipe-cleaner into each of the channels in turn and pulling the pipe cleaner backwards and forwards through the channel to effect a deposit of the zeolite 4A particles on the internal walls of the channel. Although this dry-treatment method may be suitable for laboratory-scale experiments, it is slow and laborious.

### SUMMARY OF THE INVENTION

A problem with which the invention is concerned is to provide an improved design of monolith which provides large membrane area and simplified manufacturing process.

A further problem with which the invention is concerned is to facilitate the rapid and non labor-intensive preconditioning of monoliths containing at least five conduits for subsequent membrane deposition.

A further problem with which the invention is concerned is to provide membrane structures e.g. for use in removal of water from methanol, ethanol, butanol, isoprpannol, acetone, THF, diethyl ether or other solvents by pervaporation or gas or vapor permeation, and which lend themselves to more compact and efficient associated plant. In pervapopration water permeates from a feed stream onto and into a membrane and finally though the membrane. On exiting the membrane on the low-pressure permeate side the liquid vaporizes - hence a combination of the two terms PERMeation and Evaporation gives the process of "pervaporation". Alternatively the membrane can be operated with a pure gaseous or vapor feed stream - gas permeation, in which the membrane operates in the same manner and gives the same high performance.

The invention provides a module as defined in claim 1 comprising membrane structures each comprising a tubular porous ceramic monolith having tubular conduits each having an internal diameter of about 5 to about 9 mm formed within the monolith with a zeolite membrane formed on the internal surface of each of the conduits, wherein there are five or more conduits disposed in a single annulus. Thus there may be, for example, six or twelve conduits or above in a length of either 600 or 1200 mm, the outer diameter of the support or monolith being e.g. 20 to 50 mm. For example, in a twelve channel monolith having 6mm circular channels with a 2mm minimum spacing between each channel and a 4mm spacing between each channel and the outer cylindrical surface of the monolith, the outside diameter of the monolith may be of the order of 45mm.

Any number of channels round the circumference of the monolith above four could be envisaged. There will be a trade off between the surface area per support and the outside diameter of the support, the number of monoliths that can be packed into a module and hence the resultant surface area of membrane that a module contains. Possibilities for numbers of conduits include 6, 8, 12, 18, 19, 20. It will be understood that the monoliths do not have to have any specific length, and the 600 and 1200 mm lengths mentioned above are convenient examples only. Thus for example there may be used a monolith of length 600 mm and having five or more conduits, or there may be used monoliths having four or more conduits in a length of more than 600 mm. Diameters of conduits may for example be about any of 4, 4.5, 5, 5.5, 6, 6.5, 7, 7.5, 8, 8.5 and 9 mm. The advantages of the present channel arrangement in a monolith include:
(a) inherent uniformity of pre-treatment of the support because the channels are all in the same relative position and will therefore see the same flow conditions and pre-treatment composition during pre-treatment, permitting pre-treatment of all the conduits in the monolith to be completed in a single step; and
(b) greater rigidity and hence resistance to flexing at high feed flow rates through the monolith as the middle part of the tube is now porous alumina or other ceramic with no middle channels, so that it may be possible to pack more supports/tubes into any given module.

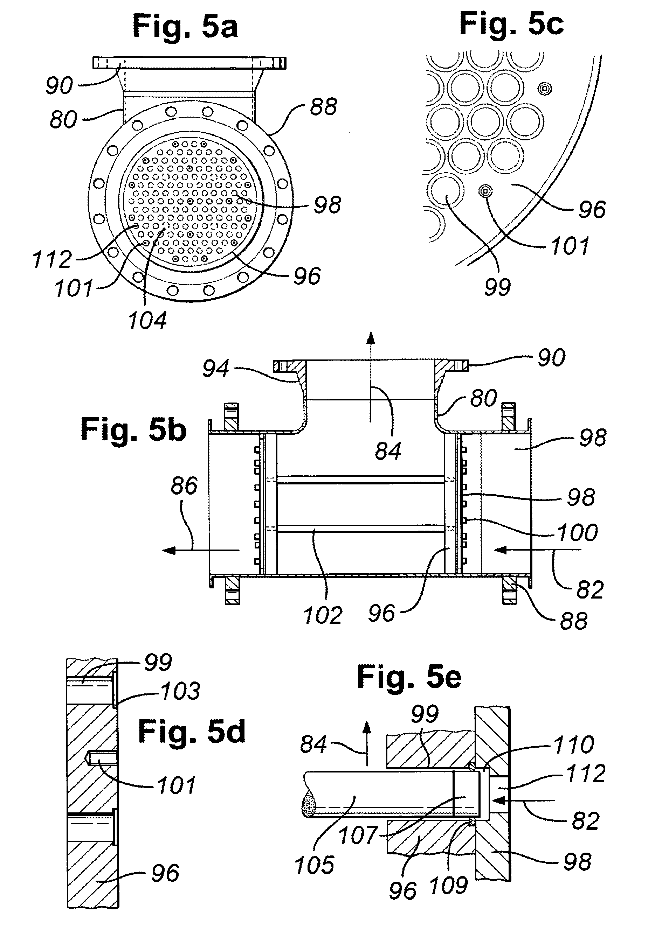

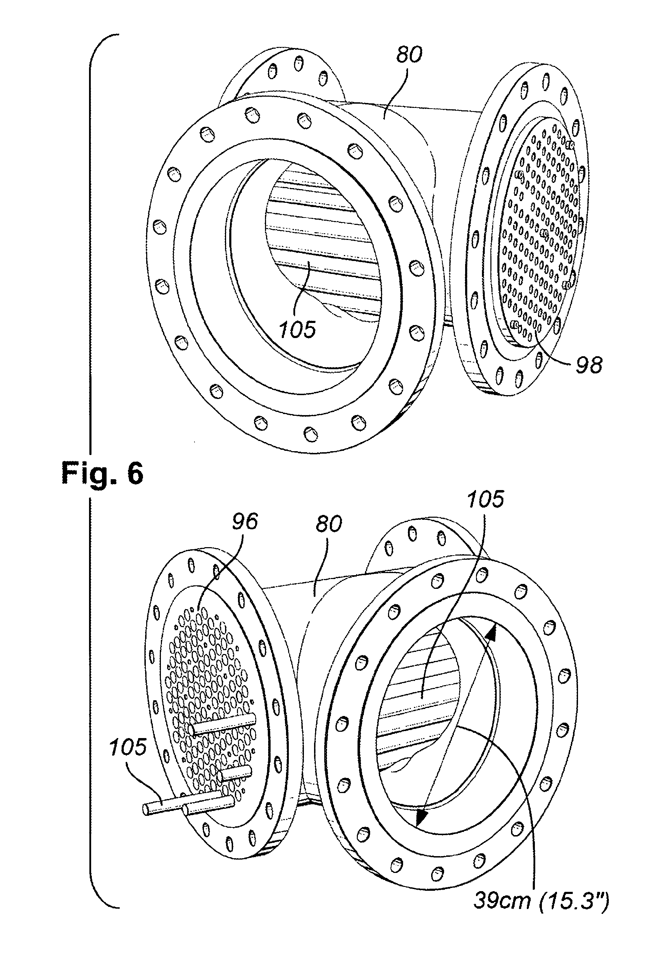

In embodiments of the invention, each monolith has significantly greater surface area than the monoliths of the prior art, and therefore the demands as to the number of monoliths required to make up a commercially practical pervaporation module of a specific surface area is reduced. Pervaporation modules are rated according to the area of membrane in the module, a 6 m² membrane area being typical. To achieve this working area of membrane, in the prior art a module (Figs 5a-5e and 6) may be of internal diameter about 40 cm and may have 130 supports or monoliths fixed in spaced parallel relationship within its internal volume and extending from end to end of that volume. Increase of the working area of the monolith reduces the number of monoliths required for a module of a given membrane working area, and self-evidently reduces manufacturing costs and parts inventory. Furthermore, the module has a branched tubular housing of stainless steel or other suitable material formed firstly with a through passage and secondly with a branch or cross-flow passage for water or other separated material (depending upon the separation required) that has passed through the membranes and through the bodies of the monoliths or supports. For the module to work, each end of the support or monolith has to be sealed to a transverse housing plate or sheet at each end of the through passage (e.g. by a combination of glazed ends to the monolith and O-ring seals). If any of the supports or modules is inadequately sealed, then the module cannot be used because of ethanol, butanol or other material to be treated will by-pass the membranes. Reduction of the number of modules and therefore in the number of seals that have to be made contributes significantly to reliability and ease of manufacture.

The module comprising a housing having a through flow passage and a cross-flow passage, a multiplicity of the membrane structures as set out above fixed in spaced parallel relationship in the through flow passage, and sealing members effecting a seal at each end between each membrane structure and the housing. The sealing members may be of elastomeric material suitable for the operating temperature e.g. Kalres or Viton which may be PTFE coated and may be in the form of O-rings and may seal against glazed outer surface regions of the support or monolith.

The chambers are disposed in a single annular arrangement and there are more than four chambers. Each substrate is glazed at its end surface and partway along its side surface, and each chamber has elastomeric sealing members (e.g. O-rings) configured to seal to a substrate when within the chamber so that direct fluid flow is only through the tubular conduits and fluid can pass to an annular region between the exterior of the substrate and the housing only through the porous body thereof. Hoses may lead from the outer annular regions of the housings to a common effluent pipe.

In a further aspect the invention provides a method for removing water from an organic liquid containing water which comprises flowing the organic liquid through conduits in one or more membrane structures as defined above or made by a method as defined above, allowing water to flow across the membranes of said membrane structure and recovering from said conduits organic liquid of reduced water content.

In a yet further aspect the invention provides a method for purifying water containing salt or other contaminants which comprises flowing the water through conduits in one or more membrane structures as defined above or made by a method as defined above and recovering water which has flowed across the conduit membranes and through the monolith or monoliths..

### BRIEF DESCRIPTION OF THE DRAWINGS

The invention is described by way of illustration with reference to the accompanying drawings, in which:
Fig. 1 shows a support or monolith having channels in which membranes are to be fouled;
Fig. 2 diagrammatically shows pre-treatment apparatus;
Fig. 3 diagrammatically shows pressure test apparatus; and
Fig. 4 shows a further embodiment of pre-treatment apparatus;
Fig 5a is a front view of a treatment module for holding supports or monoliths as shown in Fig. 5a, Fig 5b is a view in longitudinal section on the line shown in Fig. 5a, Fig. 5c is a partial elevation of a monolith support plate forming part of the module of Figs 5a and 5b, Fig. 5d is a section of part of the monolith support plate of Fig 5c and Fig 5d is a view of a one end of a monolith fixed into support and cover plates which are shown in section.
Fig. 6 provides a pair of images of a practical embodiment of a treatment module, the upper image having a membrane cover plate in place and the lower image having a membrane cover plate removed to reveal monoliths, some of which appear partly inserted.

### DESCRIPTION OF PREFERRED EMBODIMENTS

Embodiments of the invention create membranes of continuous zeolite film supported on a porous alumina substrate. Being essentially zeolitic the membrane exhibits excellent solvent resistance. In embodiments, organic liquids or aqueous dispersed value or waste products Solutions of water in organic solvents e.g. ethanol can be dried and concentrated down from any water level to below 0.1% water and azeotropes are easily broken. Liquids that can be treated include, but are not limited to, alcohols such as ethanol or butanol, ketones, ethers e.g. THF or diethyl either, amines, DMF, mineral oils e.g. transformer oil, oils of biological origin e.g. corn oil and other seed derived oils, essential oils, agrochemicals, cleaners and detergents, flavours and fragrances, inks and adhesives, cosmetics and toiletries, waste water and aqueous effluent, foods and beverages to be desalinated, biotechnology liquids, paints and dyes and equilibrium reactions systems e.g. in which removal of water promotes reaction. High temperature resistance of this membrane enables its use/application at higher temperatures yielding higher permeate fluxes and reduced membrane area or shorter drying times. Due to the high membrane selectivity, the permeate produced consists of high purity water which can be recycled or discharged without further treatment.

In an alternative the membranes may be used to produce high purity water from an aqueous feed e.g. from less pure water or from salt-contaminated water or other aqueous feeds having organic and/or inorganic contaminants. Conductivity of the purified water provides an indication of its purity. Seawater, for example has a typical conductivity of 33,000 µ Siemens/cm, urine has a conductivity of about 13,000 p Siemens/cm, tap water has a conductivity of about 700 µ Siemens/cm and high quality de-ionized water has a conductivity of 20 µ Siemens/cm. Based on their experience with membranes of this kind, the inventors expect that the present membranes will be usable to purify water to standards at least equal to and in embodiments significantly better than those available using conventional distillation and/or ion exchange e.g. to conductivities less than 20 µ Siemens/cm. It will be appreciated that high purity water has many industrial applications e.g. in the semiconductor industry and in the production of carbon nanotubes.

The present membranes are useful *inter alia* for membrane pervaporation systems for drying bio-ethanol to produce the new greener fuels - bio-ethanol and bio-butanol e.g. bio-*n*-butanol. The advantages of these fuels have already been widely recognised due to its many attributes and positive impacts on air quality by: -
- Cleaner combustion
- Reduced CO₂ emission and other air pollutants
- Production from renewable resources - agricultural crops
- Employment in low income / agricultural based economies
- Ability to mix with gasoline and be used as a fuel extender
- Incorporation to 30% in all present vehicle engines without modification

For example, the present technology can be used to dry ethanol e.g. from 96% to 99.8% and can also be used to dry butanol. Additionally the technology is commercially attractive for drying bio-butanol and a wide range of solvents in the pharmaceutical and fine chemical industries.

The membrane forming process which may be used includes syntheses of zeo-type materials in the presence of a porous support or monolith. Typical zeolites which can be used in the present invention include membrane-forming materials e.g. zeolites 3A, 4A, 5A, 13X, X, Y, ZSM5, MAPOs, SAPOs, AIPO's, Silicalite β, 0, pillared clays etc, A zeolite membrane of over a 20 µm pore size is very weak and will not withstand high pressures during use. A small pore size will restrict the escape of the water and reduce permeability and hence performance. In embodiments of the invention, the ideal pore size therefore for α-alumina is 3 - 12 µm, with zeolite 4A being preferred for many applications on account of its ~4.2Å pore size which enables it effectively to separate water from methanol or ethanol. zeolite membranes can concentrate solvents to excess of 99.95% purity; therefore, drying ethanol from 96% to 99.8% is well within the capabilities of the technology.

### Supports

The porous supports or monoliths on which zeolite membranes are formed are preferably formed of sintered ceramic powders such as α-alumina, titania, zirconia or other suitable media which are capable of being extruded and sintered upon which the zeolite will nucleate and grow. The present invention can be used with porous supports of any suitable size although, for large flux rates through a membrane, large pore sizes are preferred. Preferably pore sizes of 0.01 to 2,000 µm, more preferably of 0.1 to 200 µm and ideally of 0.1 to 20 µm are used. Pore sizes up to 300 µm can be determined by bubble point pressure as specified in ISO 4003. Larger pore sizes can be measured by microscopic methods.

With ceramic membranes it is cost effective and convenient to form a plurality of tubes in the form of a monolith. Hence monolith assemblies of tubes have been developed wherein a single, tubular body comprises a multiplicity of smaller conduits. In this invention the inner conduits or channels are at least four e.g. six or twelve and are disposed within the monolith at equal angular spacings in an annular arrangement. The thickness of the walls of the conduits, between conduits and the outside of the ceramic support or monolith will need to be sufficient to give structural strength and be sturdy enough not to break with small knocks and bumps in manufacturing the membrane, placing in the membrane housing and during use, but also be thin enough and porous enough to allow the water permeate to be removed as easily as possible without the pores become water clogged and hindering the performance (high permeability). The ideal wall thickness between conduits is 2mm and between the conduit and outside of the support is 4mm. For a tubular membrane, the larger the diameter of the tube the greater the surface area per unit length of the tube, and the lower the pressure drop down the tube. This is normally a desired criterion. However, the larger the diameter of the tube, the greater the possibility at any given flow rate of streamline flow down the tube and the greater the distance from the centre of the tube to the membrane and this will lead to a corresponding loss of performance. On the other hand, a narrower tube gives a lower surface area per unit length, and requires a lower flow rate to give the same degree of turbulence, but gives a higher pressure drop. In order to balance these characteristics, a series of parallel tubes in a module can be used, with the diameter of each tube chosen for optimum performance and the number of tubes chosen to have the desired surface area in the module.

The ends of the support or monolith need to glazed because without the glaze the feed will hit the end of the tube and travel through the ceramic body of the support or monolith without going through the membrane layer in each conduit or channel. The proportion of the feed which travels this route will not be changed in composition in any way and in the case of separation of water from ethanol or other organic liquid, the permeate becomes contaminated with organic material. With the glazed end this cannot happen and all the feed will be treated by the membranes in the conduits or channels so that the permeate is water and the organic component in the feed becomes concentrated. For polymeric membranes as they have poor selectivity this problem has not been apparent before and has not needed to be addressed, but with zeolite membranes as the permeate is in some embodiments pure water down to low feed water concentration this is important as a pure water permeate can be disposed of easily and cost effectively whereas a permeate contaminated with organic liquid will need further costly treatment before disposal.

### Support pre-treatment

Preferably the porous support or monolith is pre-treated with a zeolite initiating agent.

The zeolite initiating agent may be a cobalt, molybdenum or nickel oxide or it may be particles of a zeolite, e.g. the zeolite which it is intended to deposit on the porous support, or any combination of these. Zeolite crystals of appropriate size distribution may be produced as as-manufactured powder or by grinding, ball milling, micronization, from solution techniques or by plasma spraying and may be a blend of different materials. Another example of an initiating agent is a compound which can deposit a zeo-type pre-cursor material e.g. a silicic acid or polysilicic acid, TEO's or other organosilicic acid or a precipitated silica of correct pore size distribution, Sol Gel techniques can control sizes down to nano-particles.

The zeolite initiation agent can be contacted with the porous support or monolith by a wet process which is preferred or by a dry process. Because all the conduits are at the same radial positions and the flow conditions for the carrier liquid component of the pre-treatment liquid across the porous cylindrical surfaces of the conduits and through the body of the monolith to the exterior are the same, each conduit sees the same pre-treatment conditions and satisfactory pre-treatment of all the conduits in a monolith can be carried out in a single step using a wet process. Furthermore, there is now no constraint on the number of conduits within a single monolith other than the general design considerations of convenient conduit diameter and monolith diameter.

If a dry process is used, the particles of the zeolite initiation agent can be rubbed into the surface of the porous material, or the porous material surface can be rubbed in the particles. Alternatively the particles of the zeolite initiation agent can be caused to flow over and/or through the porous support, or pulled into the support by means of a vacuum.

If a wet process is used, a liquid suspension of powder of the zeoite initiation agent is formed and the liquid suspension contacted with the porous support to deposit the zeolite initiation agent on the support. Before contacting the surface of the porous support with the zeolite initiation agent the surface is preferably wetted with wetting agent such as an alcohol, water or a mixture of these.

The preferred method of pre-treatment is a wet process using with a mixture of unground zeolite 4A particles and micronised zeolite 4A particles, in some embodiments generally as described in US-A-6635594. As explained in that specification, a narrow size range of zeolite particles in some embodiments gives unexpectedly superior results. A preferred range of particle sizes can be achieved in some embodiments by mixing together particles of different size distribution. Zeolite particles as prepared will have their own particle size distribution. If the zeolite particles are ground or pulverised their average size becomes reduced and the distribution of sizes is changed. If these ground or pulverized particles are mixed with the unground particles, a mixture can be obtained with a preferred size distribution which in some embodiments conforms approximately to a modified Fuller curve. By way of background, it may be explained that Fuller curves are grading curves which give the minimum void space and closest packing for sands and other mineral aggregates containing particles of varying sizes. The shape of a Fuller curve depends on the maximum particle size, but is be a single curve for any given maximum particle size. The Fuller curves are described in a paper by Fuller and Thomson entitled "The laws of Proportioning Concrete" published in the Transactions of the American Society of Civil Engineers, 1907, 59, pages 67-172. Each curve is identified by its maximum particle size, e.g. a preferred particle distribution in some embodiments of this invention is a 20 µm Fuller curve. Solid form materials may be are either sieved or prepared to a set particle size distribution or mixed with different particle sizes to give a desiredthe correct narrow range distribution, 0.1 to 20 µm, of particle size sizes (Fuller Curves, Fritsch Particle size analyser). Solids are suspended in a liquid such as water to be flowed, pulled, pumped or cross flowed with alternating open and closed end tube conditions.

### Membrane formation

The membranes which can be used in the present invention can be formed by any method, for example by crystallisation from a gel or solution, by plasma deposition or by any other method such as electro-deposition of crystals on conducting substrates e. g. as described in DE 4109037. Most commonly, gels are crystallised by the application of heat and it is preferred to work with gels because they offer the possibility of single step membrane formation on an appropriately pre-treated mololith.

The synthesis gel may be any gel which is capable of producing the desired crystalline zeo-type material. Gels for the synthesis of zeo-type materials are well known and are described in the prior art given above or, for example, in EP-A-57049, EP-A-104800, EP-A-0002899 and EP-A-0002900. Standard text books by D W Breck ("Zeolites Molecular Sieves, Structure Chemistry and Use") published by John Wiley (1974) and P. A Jacobs and J. A Martens, Studies in Surface Science and Catalysis No. 33, "Svnthesis of High Silica Alumino silicate Zeolites" published by Elsevier (1987), describe many such synthesis gels. Alternatively/additionally a liquid solution method may be used.

In the gel method for forming the membrane (method 1), the gel used to form the membrane (hydrogel) preferably has a molar composition in the range of (1.5-3.0) Na.₂O : (1) Al₂O₃ : (2.0) SiO₂ : (50-200) H₂O and the method used can be used in any of the methods disclosed in the references listed above. The hydrogel has a large solid content of reactants that continually dissolve into the aqueous phase to replenish the zeo-type material component which is crystallising out from the aqueous phase during the crystallisation process of zeolite crystal formation. It has been shown that silicic acids from the hydrogel attach to a surface and are amorphous at first especially where the surface has been pre-seeded. This gradually builds up in regions, still amorphous, some of which later on exhibit isomorphous replacement of silicon by aluminium prior to crystallisation. This is also a factor of the level of solubility and rate of solubilisation of the silicic acids and hydrated aluminium ions from the reactants into the aqueous solution and out again into the crystallising zeolite product. From these initial crystals physically held to the surface further zeolite grows from the these existing crystals, "twinning" to other crystals until a layer is formed with no space between any zeolite crystals and a uniform membrane is formed and is chemically bound to the support.

In the liquid solution method (method 2) the liquid solution used to form the membrane preferably has a molar composition in the range of (6-10) Na.₂O : (0.2) Al₂O₃ : (1.0) SiO₂ : (150-250) H₂O. The liquid solution preferably contains a maximum amount of the compound capable of crystallising to form a zeo-type material whilst still remaining a liquid solution. By maximum amount is meant the maximum amount which can be maintained in solution so that no precipitation occurs before zeolite formation. This method gives crystals that are smaller than those obtained using method 1.

Methods (1) and (2) can be used under the conditions listed below and method (1) and method (2) can be used either on their own or with method (1) followed by method (2) or vice versa.

The porous support or monolith can be contacted with the growth medium by immersion, and the growth medium may be kept static. Pressure may also be applied but it is usually convenient to conduct the crystallisation under autogenous pressure. Preferably the porous support or monolith is completely immersed in the growth medium. Alternatively, if desired, only one surface of the support or monolith e.g. the inner surfaces of the tubular conduits may be in contact with the growth medium. This may be useful, for example, if it is desired to produce a tubular membrane within each conduit, where only the inside of the tube need be in contact with the growth medium. In embodiments of the invention, the conditions which can be used for forming the membrane are with a temperature of the growth solution in the range 50 - 100°C, and pH adjusted to within the range 12.5 - 14 by addition of sodium hydroxide or ammonia. If desired the sodium ion concentration can be increased without increasing the pH by the addition of a sodium salt such as sodium chloride. The growth solution can be seeded with crystals of the desired zeolite to be synthesised. If growth time for zeolite 4A is allowed to go over 6 hours (5.0 hrs may be used in practice) zeolite 4A changes to Zeolite P which is like little florets and does not twin like zeolite 4A which is required for membrane formation.

Although in embodiments of the invention a single stage treatment is preferred, in other embodiments if desired the treatment with the gel or liquid solution can be repeated one or more times to obtain thicker membrane coatings. Furthermore, methods (1) and (2) can be used under the conditions listed below and method (1) and method (2) can be used either on their own or with method (1) followed by method (2) or vice versa.

The membrane can be washed to pH neutral after membrane formation prior to any post-treatment. If the membranes are not washed after growth to pH neutral, zeolite P again can form and also residual pH will cause the post-treatment material to precipitate prematurely. The monolith is then dried at 100°C for 3 hours and vacuum tested. The amount of air which then permeates through the membranes formed in its internal conduits of the monolith and then through the body of the monolith measures the quality of the membranes that have been deposited within the internal conduits of the monolith.

### Membrane post-treatment

Post-treatment is the final process in the manufacture of the zeolite membranes within the conduits of the monolith. The process involves treating the conduits with a solution of polysilicic acids and optionally polydimethylsiloxane in isopropyl alcohol (IPA) at about 70°C and under vacuum. This has the effect of sealing off any defects remaining in the zeolite crystal structure of the membrane after its growth process. Post-treatment may be the final stage before batch-testing and despatch of the membrane-containing monoliths. Polydimethylsiloxane is a commercial product whereas polysilicic acids at present need to be synthesised in-house.

Methods of making silicic acids are described in GB-A-2269377 and US-A-5935440. A preferred method is by acidification of a sodium silicate solution followed by separation of the silicic acid by phase separation using an organic solvent such as tetrahydrofuran. The organic phase can then be dried and anhydrous silicic acid separated e.g. by addition of *n*-butanol to obtain a substantially anhydrous solution of silicic acid. The degree of polymerisation of the silicic acid depends on the actual conditions used e.g. the time the sodium silicate solution is in contact with the acid before addition of the organic solvent, temperature etc. The silicic acid used in the present invention may have an average molecular weight in the range of 96 - 10,000 and more preferably of 96 - 3220. The silicic acids are known compounds and are usually prepared as a mixture of acids with a range of different molecular weights and this mixture is suitable for use in the present invention. The silicic acids are combination of silicon, oxygen and hydrogen, linked together in the case of polysilicic acids through an oxygen bridge, with terminal -OH groups. They have a generic formula of SiₙOₚ(OH)ᵣ where n, p and r can vary from n = 1, p = 0, r = 4 in the case of monosilicic acid through to n = 8 - 12, p = 12 - 20, r = 8 - 12 in the case of medium molecular weight silicic acids through to n = 20 - 32, p = 36 - 60 and r = 8 - 20 in the case of a higher molecular weight polymers. The above patents state that the average molecular weights are in the range of 96 - 10,000 (monosilicic - polysilicic acids) but preferably 96 to 3220 and there may be separate solutions of low (96), low-medium (800), high -medium (1600) and high molecular weight (3200) silicic acids which are then mixed together. Thus the silicic acids used in the present invention can be used in "narrow" molecular weight distribution as formed or in a combination of different molecular weight ranges. Greater flexibility can be introduced into the final membranes by treating them with a flexibilising agent by adding e.g. a hydroxyl-terminated polysiloxane e.g. commercially available polydimethylsiloxane into the silicic acid solution before treatment of the membrane. It has now been appreciated that the above quoted average molecular weight ranges may too precise and narrow to describe a condensation polymerisation process. Each of the four silicic acid solutions above will contain molecular weights from 96 to well in excess of 10,000 and the differences between the four solutions may not be as great as previously believed, although it remains advantageous to make and use them.

How the invention may be put into effect will now be described by way of illustration only in the following Example.

### Example

### Monolith material

Monolith material which may be used comprises ceramic pervaporation substrates or monoliths based on alumina of porosity 34-39%, density 2.4-2.6 g/cm³, and a pore size distribution with an average of maximum pore size ≤ 7 µm, an average of pores, 10% ≤ 5µm and an average of pores 50% greater than 2.7-4.1 µm.

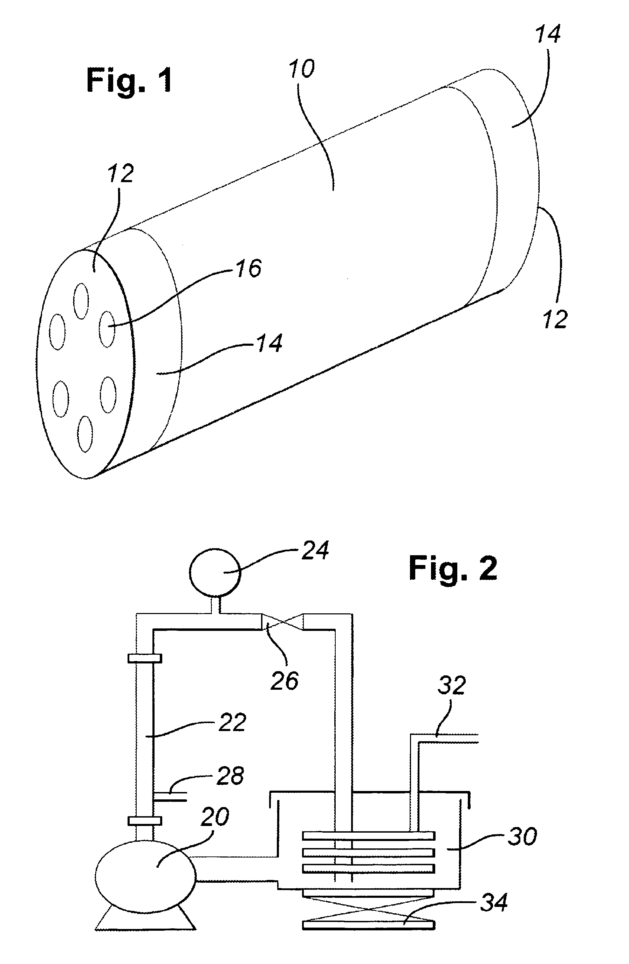

Fig 1 is a diagrammatic perspective view of a porous monolith 10 having in this instance six axial conduits 16 disposed equi-angularly in an annular arrangement and opening through opposite end faces 12 of the monolith. Glazed regions 14 cover the end faces 12 and extend partway along at least the outer surface of the monolith as shown to permit fluid-tight O-ring seals to be made to the outer surface of the monolith with a certain amount of end-float to allow for manufacturing tolerances. In this way seals may be made to opposite ends of the monolith 10 so that fluid is forced to flow freely from one end face 12 of the monolith only along the axial conduits 16 to the other end face 12. The extent of cross-flow of fluid through the porous body of the monolith will depend on its porosity, the nature of the fluid and any membranes formed on the cylindrical inner surfaces of the conduits 16.

Six and twelve-conduit monoliths are of length 600 mm or 1200 mm and conduit internal diameter also 6 mm. The conduits of the monolith must be at least 5mm in diameter otherwise not enough hydrogel zeolite growth solution can be got into the conduit to form the membrane in one growth due to the viscosity of the growth solution (like wallpaper paste; method 1). A uniform zeolite membrane will only form in circular type conduits. Anything with sharp edges hinders uniform membrane formation. In contrast, the solution disclosed in relation to the high pH solution technique (above; method 2) is not viscous and will go down narrower conduits but as it contains a smaller quantity of reactants to form a membrane in one growth.

### Pretreatment

A zeolite dispersion is made by dispersing 4kg of type 4A zeolite 2-5µm-sized particles in 16 liters of demineralised water with agitation. The dispersion is then micronized with agitation being maintained continuously from the time when the dispersion is first formed until the dispersion is fed into the micronizer. The micronizer is a Microfluidics M 210c microfluidizer operated at 203 MPa (29500 psi). The freshly formed sub-micron sized zeolite dispersion is left to stand for 48 hours and then decanted into a fresh container with any previously deposited solid material being discarded. For pre-treatment of a single monolith, 30g of the Zeolite 4A 2-5µm powder is dispersed in 100 ml of demineralised water to form a homogeneous slurry, after which 720 ml of the micronized dispersion (~9g solids, sub µm) is added and the resulting mixture is diluted to a volume of 7 liters (it may be found that larger volumes are required for some monoliths). The combination of micron sized and smaller-sized particles in the resulting aqueous dispersion is believed to permit more efficient packing during the subsequent pre-treatment step.

A monolith as shown in Fig. 1 is placed in housing 22 (Fig. 2) to which it is sealed endwise at its glazed ends by means of O-ring seals so that flow is from end to end of the monolith along the tubes extending axially therethrough. The housing 22 is connected in a fluid circuit comprising a pump 20 which draws fluid from tank 30 and circulates it through housing 22 and valve 26 to return to the tank 30. In the circuit are a pressure gauge 24 upstream of valve 26 and an effluent collection hose 28 leading from housing 22. The tank 30 is supported on stand 34 and is provided with a coolant coil 32.

For pre-treatment of the monolith using a stop flow technique to force crystals of zeolite into the porous surface of the support or monolith, the 7 liters of dispersion prepared as described above are introduced into the tank 30 and cooled to 12°C with continued agitation. The dispersion is then pumped from the tank 30 with alternating 60-second periods of flow along the monolith through its internal conduits, valve 26 being open, and cross-flow through the monolith and into the hose 28, the valve 26 being closed. The periods of cross-flow through the body of the monolith bring about zeolite particle deposition on the surface of the internal conduits of the monolith, and the periods of circulation remove un-deposited material and introduce fresh dispersion. For 15 seconds of every minute during cross-flow periods the effluent (i.e. material that has flowed through the monolith) is collected and weighed to observe progress in record the amount of zeolite that has become material being deposited, the effluent then being returned to the tank 30. As more zeolite becomes deposited on the porous surfaces of the channels within the monolith, the volume or weight of material that flows across the membrane progressively reduces. The above procedure is continued for 9 minutes, at which point a the final reading being on cross flow is taken. The difference between the final and the preceding in readings shall for be less than 10g/minute^{min-1} per tube, otherwise the monolith is not progressed to the growth stage. The monolith is then removed from housing 22 and dried at 120°C for 2-4 hours.

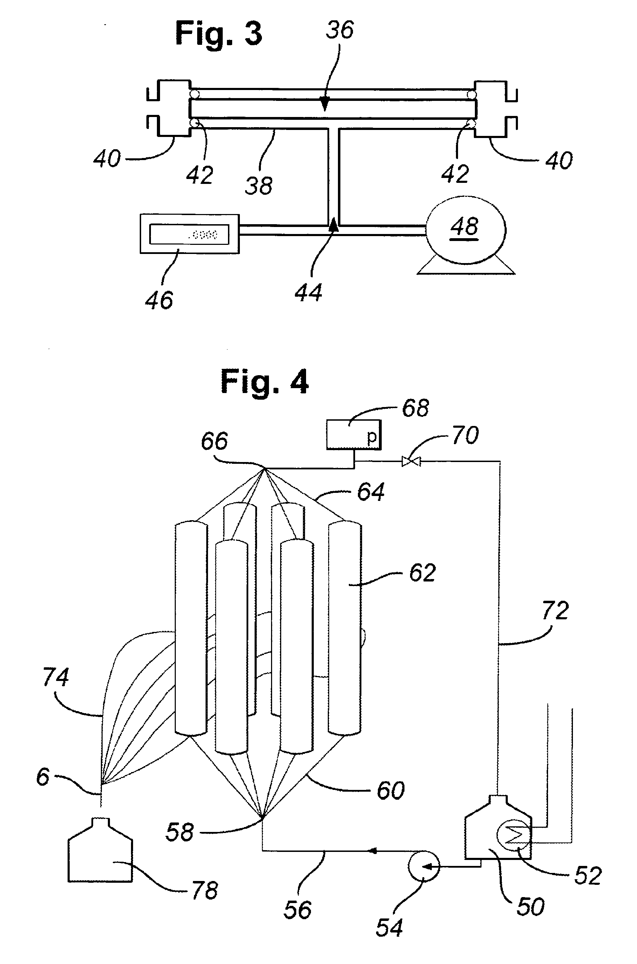

Alternative apparatus for simultaneously treating a number of supports or mololiths is shown in Fig. 4. Tank 50 holds an appropriate volume of zeolite dispersion which is cooled to the required temperature by heating coil 52 and is pumped by pump 54 via dispersion supply pipe 56 to supply manifold 58. A number of housings 62 for treating monoliths as described above are disposed in an annular arrangement in which they are supported by one or more annular supports (not shown). In the illustrated embodiment the number of housings is six, but the number is arbitrary and may e.g. be up to 20 or even more. Dispersion is fed to the support or monolith in each annulus via delivery pipes 60 which extend from the manifold 58 to the base of each of the housings 62. During periods of through flow, dispersion is recovered from each of the housings 62 by respective recovery pipes 64 which lead from the upper end of each housing 62 to a common manifiold 66 and thence via valve 70 and return pipe 72 to the tank 50. A pressure gauge 68 monitors pressure in the recovery line 72. When the valve 70 is closed, cross-flow through the body of the support or monolith in each housing 62 takes place, and effluent which has passed into the outer annular region of each chamber 62 is collected by hoses 74 which extend from each chamber 62 to a common discharge pipe 76. Effluent from that pipe is collected in a vessel 80. As before, during cross-flow periods for 15 seconds of every minute the effluent is collected in the vessel 80 and weighed to record the amount of material being deposited, the effluent then being returned to the tank 50.

The apparatus of Fig. 4 has a number of advantages. Pre-treatment is the rate-determining step in the production of membrane-containing supports or monoliths, and the apparatus enables a number of supports or monoliths to be treated simultaneously. The supply path for the dispersion from the pump 54 via manifold 58 and delivery pipes 60 is the same for each housing 62, as is the return path via recovery pipes 64 and return pipe 72, and none of the housings 62 experiences different conditions from any of the others. An arbitrary number of supports or monoliths may therefore receive pre-treatment in a single step, with the conditions to which each of them has been subjected being substantially identical.

Membrane material is then caused to grow on the inner surfaces of the conduits through the monolith. Demineralised water is heated to 40°C, after which sodium hydroxide is added and allowed to mix, sodium aluminate powder is added on further heating to 50-55°C, followed by slow addition of sodium silicate solution in a continuous stream, after which the resulting mixture was heated to 95-98°C to give a synthesis gel of molar composition 2.01 Na₂O : Al₂O₃ : 2.0 SiO₂ : 143.10 H₂O. The monolith is suspended in a growth vessel after which the synthesis gel is pumped into the growth vessel and flows up along the conduits through the monolith and up the outside of the monolith until it is about 2 cm above the top of the monolith. The monolith is then raised and lowered a short distance in order to promote filling of the conduits with synthesis gel, after which a small additional volume of synthesis gel is added to the growth vessel., and the growth vessel is placed into a pre-heated oven at 120°C for 1 hour before reducing the temperature to 100°C and maintaining the growth vessel in the oven for a further 4 hours (5 hours total). The bottom of the monolith should be a sufficient distance/capacity from the bottom of the growth vessel to allow space for crystals which form in the bulk solution to settle with gravity to the bottom of the growth vessel and not to be in the vicinity of the conduits of the monolith otherwise these residual zeolite crystals hinder growth by taking up the space where growth solution should be available to the developing membrane.

After growth is complete the membrane is washed to neutral pH. If this is not done, zeolite P again can form, also residual pH will cause the post-treatment to precipitate prematurely. The monoliths are washed individually and encrusted zeolite on outside of the monolith removed, after which the monolith is washed in a washing rig overnight and dried at 100°C for 3 hours.

The dried monolith 36 is then vacuum tested using the apparatus of Fig 3. It is secured within a housing 38 by means of end members 40 which have O-rings 42 that gas-tightly seal against the glazed ends of the monolith 36. The internal conduits of the monolith are open to atmosphere via end members 40. The annular space between the outer surface of the monolith and the housing 38 leads to a flexible hose 44 connected to a vacuum gauge 46 and a pump 48. To conduct a test, the pump 48 is operated for about one minute with the monolith 36 in place, after which a vacuum reading is taken. A tube for which the recorded pressure at gauge 46 exceeds 20 mbar is rejected on the ground that the membrane is too porous.

Polysilicic acid used for post-treatment may be prepared as follows. A 3M solution (1 litre) of hydrochloric acid in deionised water in a glass beaker is cooled with ice/water and stirred at 300rpm. Cystalline sodium silicate (200g) in deionised water is added dropwise with a pipette (20ml/min, 45 min total addition) to the cooled hydrochloric acid with continued stirring and cooling. Continue to cool and stir the solution for a further period as specified below. The length of time for which this is continued depends on the desired degree of polymerization: high molecular weight stir for 180 minutes, medium-high molecular weight stir for 90 minutes, low-medium molecular weight stir for 45 minutes and low molecular weight stir for zero minutes. Tetrahydrofuran is then added to the contents of the beaker, followed immediately by sodium chloride (500g) and stir/chill for a further 60 min. The stirrer is then switched off and the mixture is allowed to stand for 30 min. The liquid from the beaker is then decanted into a 2-litre separating funnel leaving the undissolved salt behind and allowed to settle for 2 min. The organic layer is separated from the aqueous layer by draining off the lower aqueous layer. The aqueous part is discarded and the organic part is placed into a 2-litre round-bottomed flask. Pre-dried molecular sieve (200g, cooled in a sealed container) is added to the contents of the flask to remove any traces of water from the product, after which the dried product is poured into a 5-litre round-bottomed flask for distillation. Butanol (1.28 liters) is added using several aliquots to wash the product from the molecular sieve. The majority of the solvent is then removed from the product by distillation, stopping the distillation when about 500ml remains in the flask. The hot product is then filtered through fluted filter paper (Whatman No 1) into a screw-topped bottle which is placed in a refrigerator. For optimum storage stability, the percentage of active material in the solution should be in the range 15-25% w/w.

In a typical post-treatment procedure, a mixture of all four of the above mentioned polysilicic acids of mean molecular weight of about 1400 plus polydimethylsiloxane is diluted with ethanol or isopropyl alcohol to 5% wt. solids. 500ml. of this solution is circulated over the feed side of the membrane (i.e. the interior of the conduits through the monolith) by means of e.g. a peristaltic pump and drawn through the membrane by applying a vacuum across the monolith to treat the surface whilst being heated to 70 C., with vacuum being maintained for 5 hours to permit crosslinking of the the silicic acid to take place in the pores of the membrane. Permeate may be collected in cold traps. The post-treatment solution is then drained from the monolith and the treated module is allowed to dry in air.

### Treatment module

The membranes or supports 105 (Fig 5e) are incorporated into a treatment module which comprises a T-shaped tubular housing of stainless steel or other suitable material generally indicated by the reference numeral 80 which has a through-flow path for fluid to be treated indicated by arrows 82, 86 and a cross-flow path 84 for gas separated by pervaporation or gas permeation both e.g. of diameter about 40 cm. Flanges 88,90 provided with fixing holes enable the module to be attached by bolts to adjoining pipework. Fitted into the main flow path is a membrane or support holder comprising a pair of membrane support plates 96 welded or otherwise fluid-tightly attached to the inner surface of housing 80 and held at the appropriate spacing by four spacer bars 102 with threaded ends that are screwed into fixing holes 104 (Fig. 5a) in the plates 96. The plates 96 are configured to support a multiplicity of the membrane structures 105 fixed in spaced parallel relationship in the through flow passage, for which purpose they are formed with a multiplicity of membrane structure receiving holes 99 disposed in an array. Where the holes 99 open to the outer face of the plates 96 they are formed with radially enlarged regions 103 for receiving O-ring seals 109 e.g. of Kalres or Viton which may be PTFE coated. As in apparent in Fig. 5e, the ends of the supports or monoliths 105 have glazed end regions 107 which protrude slightly beyond the outer faces of the plates 96 and which are fluid-tightly sealed by the O-ring seals 109 which become substantially deformed from their original circular shape in order to generate the sealuing forces that are desirable. In this way, fluid entering the module at 82 has to pass along the internal channels in the modules 105 to the downstream side as indicated by arrow 86 and cannot pass unseparated to the cross-flow path 84. When the modules are in place, cover plates 98 formed with through-holes 112 corresponding to each module position are attached to the support plates 96 by means of bolts 98 received in threaded holes 101. The holes 112 in the cover plates 98 open to the blind faces via radially enlarged rebated regions 110 that receive the ends of the supports or monoliths 105. It will be seen that the supports or monoliths only directly contact the O-ring seals 109 and do not touch either the holes 99 in plates 96 or the cover plates 98. The supports or monoliths are effectively floating without metal-ceramic contact, and differences in coefficient of thermal expansion between the ceramic of the monoliths or supports and the stainless steel or other material of the housing 80 and other metallic components do not give rise to problems.

It will be apparent that the module is mechanically complex because of the large number of monoliths 105 in the array to give the required membrane surface area, and the large number of seals at O-rings 109. Failure to form a fully effective seal at an end of any of the modules 105 results in un-separated fluid at 82 entering the cross-flow path 84, and if this happens it is difficult and time-consuming to identify which monolith or monoliths have defective seals. For that reason, any reduction in the number of monoliths required, as by increasing the internal membrane area of each monolith, has significant practical advantages. over and above those of decreasing the required diameter of the housing 80.

### In-use maintenance

During its life the membranes will get fouled from dirty feeds. The membranes can be periodically cleaned by washing with the solvent being dried and deionised water (Cleaning Water/Solvent Washing 90:10). The solvent/deionised water combination must always have at least 10% solvent otherwise the deionised water will remove sodium ions from the membrane and lead to a loss in performance because of a deterioration of the zeolite 4A structure and ultimately to membrane failure through cracking due to increased internal strains within the zeolite crystal lattice. In practice to overcome loss in performance either from the above or due to ageing of the membrane, plants are oversized by 10 to 20% to allow for this and to ensure the plant will do the duty for the life of the membranes (1 to 3 years depending on the mature of the feed).

During in life use, especially with high water containing feeds sodium ions will be leached out from the zeolite structure, as described above. Therefore, to overcome this an to extend the life of the membrane, the membranes can be washed with a 90:10 solvent : deionised water mixture containing a small percentage of sodium ions (up to 1%). The sodium ions should come from a soft and not a hard base source e.g. sodium acetate and not sodium chloride.

### Advantages over competitive technology:

Mitsui zeolite membranes are grown on the outside of the tube or thimble type tube where one end is the ceramic. Therefore they are prone to being damaged when loaded into a module and in the thimble format have to be supported inside the housing with guide rods which can also lead to damage of the membrane. As the Mitsui membrane is grown on the outside of the tube the membrane surface area per tube is far less that that for the present membranes which are grown in the channels of a multi channel tube. Mitsui therefore need many more tubes to achieve the same membrane area which for α-alumina tubes is costly. Supports from mullite are less expensive but are more friable and easily break or fracture.

Polymer membranes have much lower fluxes than zeolite membranes due to their low porosity (2%) compared to Zeolites (40%). As the separation in polymeric membranes is due to flow (permeation) of water between polymer chains the selectivity is not as good as that of a zeolite which separates on the basis of molecular size and shape. A lot of polymeric membranes are not very good at low water feeds because water from within their own structure can also be removed which can lead to membrane deterioration and failure. Polymeric membranes by their very nature are organic and are easily fouled by organic containments in the feed. They are also very hard to clean once fouled and usually have to be replaced. Zeolites being hydrophilic are not as easily fouled and can be cleaned as described previously, or by steam cleaning and peroxide treatment.

Molecular sieves contain the zeolite 4A crystal which the zeolite membrane is made from and these are held together in spheres / beads or pellets with a clay binder (up to 30%). A mole sieve plant will have two beds. Whilst one is drying the solvent the other is having the water removed from a previous drying process by heating at 300°C for up to 48 hours, which is very energy intensive. Because of attrition caused by the beads rubbing together during use fines (clay material) are left in the dried solvent and then have to be removed

Normal distillation can only dry solvent to the azeotrope e.g. for ethanol its 96% ethanol. To dry further than this azeotropic distillation has to be used which involves adding an expensive and carcinogenic third material to the distillation process. An alternative is polish the nearly dry solvent with molecular sieve.

## Claims

1. A module comprising:
a housing (80) having a through-flow passage (82, 86) and a cross-flow passage (84) for separated material;
a multiplicity of membrane structures (105) fixed in spaced parallel relationship in the through-flow passage, and
sealing members (109) effecting a seal at each end between each membrane structure and the housing,
wherein the membrane structures each comprise a porous cylindrical ceramic monolith (10) having five or more tubular conduits (16) formed within it and disposed in a single annulus only, each conduit having an internal diameter of 5 to 9 mm, and a zeolite membrane being formed on the internal surface of each conduit; and
wherein glazed regions (14) cover the end faces (12) of the monoliths and extend partway along at least the outer surfaces of the monoliths and the sealing members (109) are O-rings which seal against the glazed outer surface regions.

2. The module of claim 1, wherein the monoliths are of sintered α-alumina powder of pore size 0.1-20 µm and outer diameter 20-50 mm.

3. The module of claim 1 or 2, wherein the wall thickness between the conduits of each monolith is about 2 mm.

4. The module of claim 3, wherein the wall thickness between the conduits and the outer surface of each monolith is about 4 mm.

5. The module of any preceding claim, wherein the membranes are of zeolite 4A.

6. The module of any preceding claim, wherein the membranes further comprise a surface-modifying agent cross-linked with the zeolite to form a membrane with substantially no defects;

7. The module of claim 6, wherein the surface-modifying agent is cross-linked silicic acid or an alkyl silicate.

8. The module of any preceding claim, wherein the monoliths are of length 600 mm.

9. The module of any of claims 1-7, wherein the monoliths are of length 1200 mm and therein there are 6 or 12 conduits or above in each monolith.

10. The module of any preceding claim, wherein:
membrane support plates (96) fluid-tightly attached to an inner surface of the housing have a multiplicity of membrane structure receiving holes (99) disposed in an array and opening to outer faces of the plates (96);
the membrane structures (105) are supported in the receiving holes (99) in said spaced parallel relationship with glazed end regions (107) protruding slightly beyond the outer faces of the support plates;
the O-ring seals (109) are received in radially enlarged regions (103) at which the receiving holes (99) open to the outer faces of the support plates for forming fluid-tight seals with the glazed end regions (107); and
cover plates (98) are formed with through holes (112) corresponding to each membrane structure position and are attached to the support plates (96) by means of bolts (98);
the holes in the cover plates opening to blind faces via radially enlarged regions (110) that receive the end regions (107) of the membrane structures;
the cover plates (98) deforming the O-ring seals to generate sealing forces; and
the membrane structures (105) only directly contacting the O-ring seals and not touching either holes (99) or the cover plates (98).

11. A method for removing water from an organic liquid containing water which comprises flowing the organic liquid through a module as defined in any of claims 1-10, allowing water to flow across the membranes of said module and recovering from said module organic liquid of reduced water content.

12. The method of claim 11, wherein the organic liquid is an alcohol.

13. The method of claim 12, wherein the organic liquid is ethanol or butanol.

14. A method for purifying water containing salt or other contaminants which comprises flowing the water through conduits in a module as defined in any of claims 1-10, and recovering water which has flowed across the membranes of said module and through the monoliths, the water recovered having a conductivity of less than 20 µSiemens/cm.

## Patentansprüche

1. Modul, umfassend:
ein Gehäuse (80) mit einem Durchströmungsweg (82, 86) und
einem Querströmungsweg (84) für abgetrenntes Material;
mehrere Membranstrukturen (105), die in einem beabstandeten parallelen Verhältnis im Durchströmungsweg befestigt sind, und
Dichtungsteile (109), die eine Dichtung an jedem Ende zwischen jeder Membranstruktur und dem Gehäuse bewirken,
wobei die Membranstrukturen jeweils einen porösen zylindrischen Keramikmonolith (10) umfassen, der 5 oder mehr rohrförmige Kanäle (16), die darin ausgebildet und nur in einem einzigen Ring angeordnet sind, wobei jeder Kanal einen Innendurchmesser von 5 bis 9 mm hat, und eine Zeolithmembran aufweist, die auf der Innenseite jedes Kanals ausgebildet ist; und
wobei glasierte Bereiche (14) die Endflächen (12) der Monolithe bedecken und sich über einen Teil entlang zumindest der Außenseiten der Monolithe erstrecken und die Dichtungsteile (109) Rundringe sind, die gegenüber den glasierten Außenseitenbereichen abdichten.

2. Modul nach Anspruch 1, wobei die Monolithe aus gesintertem α-Aluminiumoxidpulver mit einer Porengröße von 0,1 bis 20 µm und einem Außendurchmesser von 20 bis 50 mm sind.

3. Modul nach Anspruch 1 oder 2, wobei die Wanddicke zwischen den Kanälen jedes Monoliths etwa 2 mm beträgt.

4. Modul nach Anspruch 3, wobei die Wanddicke zwischen den Kanälen und der Außenseite jedes Monoliths etwa 4 mm beträgt.

5. Modul nach einem der vorstehenden Ansprüche, wobei die Membranen aus Zeolith 4A sind.

6. Modul nach einem der vorstehenden Ansprüche, wobei die Membranen ferner ein Oberflächenmodifizierungsmittel umfassen, das mit dem Zeolith vernetzt ist, so dass eine Membran mit im wesentlichen keinen Mängeln entsteht.

7. Modul nach Anspruch 6, wobei das Oberflächenmodifizierungsmittel vernetzte Kieselsäure oder ein Alkylsilicat ist.

8. Modul nach einem der vorstehenden Ansprüche, wobei die Monolithe eine Länge von 600 mm haben.

9. Modul nach einem der Ansprüche 1 bis 7, wobei die Monolithe eine Länge von 1.200 mm haben und in jedem Monolith darin 6 oder 12 Kanäle oder mehr vorliegen.

10. Modul nach einem der bevorstehenden Ansprüche, wobei:
Membranhalteplatten (96), die flüssigkeitsdicht an die Innenseite des Gehäuses angebracht sind, mehrere Aufnahmelöcher (99) für die Membranstruktur haben, die in einer Gruppe angeordnet sind und sich zu den Außenseiten der Platten (96) hin öffnen;
die Membranstrukturen (105) in den Aufnahmelöchern (99) in dem beabstandeten parallelen Verhältnis zu den glasierten Endbereichen (107) gehalten werden, die etwas über die Außenseiten der Halteplatten vorstehen;
die Rundringdichtungen (109) in radial erweiterten Bereichen (103) aufgenommen werden, an denen sich die Aufnahmelöcher (99) zu den Außenseiten der Halteplatten hin öffnen, um flüssigkeitsdichte Abdichtungen mit den glasierten Endbereichen (107) zu bilden; und
Abdeckplatten (98) mit Durchgangslöchern (112) ausgebildet sind, die jeder Position der Membranstruktur entsprechen und mit Schrauben (98) an die Halteplatten (96) angebracht sind;
wobei sich die Löcher in den Abdeckplatten über radial erweiterte Bereiche (110), die die Endbereiche (107) der Membranstrukturen aufnehmen, zu Blindflächen hin öffnen;
wobei die Abdeckplatten (98) die Rundringdichtungen deformieren, so dass Dichtungskräfte entstehen; und
die Membranstrukturen (105) nur direkt mit den Rundringdichtungen in Kontakt stehen und weder die Löcher (99) noch die Abdeckplatten (98) berühren.

11. Verfahren zum Entfernen von Wasser aus einer wasserhaltigen organischen Flüssigkeit, das das Strömenlassen der organischen Flüssigkeit durch ein Modul nach einem der Ansprüche 1 bis 10 umfasst, wobei Wasser entlang der Membranen des Moduls strömen kann und aus dem Modul organische Flüssigkeit mit geringerem Wassergehalt gewonnen wird.

12. Verfahren nach Anspruch 11, wobei die organische Flüssigkeit ein Alkohol ist.

13. Verfahren nach Anspruch 12, wobei die organische Flüssigkeit Ethanol oder Butanol ist.

14. Verfahren zum Reinigen von Wasser, das Salz oder andere Verunreinigungen enthält, umfassend das Strömenlassen des Wassers durch Kanäle in einem Modul nach einem der Ansprüche 1 bis 10 und das Gewinnen von Wasser, das entlang der Membranen des Moduls und durch die Monolithe geströmt ist, wobei das gewonnene Wasser eine Leitfähigkeit von weniger als 20 µSiemens/cm hat.

## Revendications

1. Module comprenant :
une enceinte (80) présentant un passage d'écoulement direct (82, 86) et un passage d'écoulement transversal (84) destiné à un matériau distinct ;
une multiplicité de structures de membrane (105) fixées suivant une relation espacée et parallèle dans le passage d'écoulement direct, et
des éléments d'étanchéité (109) effectuant un joint étanche au niveau de chaque extrémité entre chaque structure de membrane et l'enceinte,
dans lequel les structures de membrane comprennent, chacune, un monolithe poreux cylindrique de céramique (10) comportant cinq conduits tubulaires (16), ou plus, formés en lui et disposés en un anneau unique seulement, chaque conduit présentant un diamètre interne de 5 à 9 mm, et une membrane de zéolite étant formée sur la surface interne de chaque conduit ; et
dans lequel des zones vitrifiées (14) couvrent les faces d'extrémité (12) des monolithes et s'étendent au moins, en partie, le long des surfaces extérieures des monolithes et dans lequel les éléments d'étanchéité (109) sont des joints toriques qui s'appuient de façon étanche contre les zones des surfaces extérieures vitrifiées.

2. Module selon la revendication 1, dans lequel les monolithes sont constitués de poudre d'alumine-α frittée d'une dimension de pore de 0,1 à 20 µm et d'un diamètre extérieur de 20 à 50 mm.

3. Module selon la revendication 1 ou 2, dans lequel l'épaisseur de la paroi entre les conduits de chaque monolithe est de 2 mm environ.

4. Module selon la revendication 3, dans lequel l'épaisseur de la paroi entre les conduits et la surface extérieure de chaque monolithe est de 4 mm environ.

5. Module selon l'une quelconque des revendications précédentes, dans lequel les membranes sont constituées de zéolite 4A.

6. Module selon l'une quelconque des revendications précédentes, dans lequel les membranes comprennent, de plus, un agent de modification de surface réticulé avec la zéolite afin de former une membrane ne présentant essentiellement aucun défaut.

7. Module selon la revendication 6, dans lequel l'agent de modification de surface est un acide silicique réticulé ou un silicate d'alkyle.

8. Module selon l'une quelconque des revendications précédentes, dans lequel les monolithes présentent une longueur de 600 mm.

9. Module selon l'une quelconque des revendications 1 à 7, dans lequel les monolithes présentent une longueur de 1200 mm et dans lesquels il y a 6 ou 12 conduits ou davantage dans chaque monolithe.

10. Module selon l'une quelconque des revendications précédentes, dans lequel :
les plaques de support de membrane (96) fixées de façon étanche aux fluides à une surface intérieure de l'enceinte comportent une multiplicité de trous de réception de structures de membrane (99) disposés selon un réseau et s'ouvrant vers les surfaces extérieures des plaques (96) ;
les structures de membrane (105) sont supportées dans les trous de réception (99) suivant ladite relation espacée et parallèle avec des zones d'extrémité vitrifiées (107) faisant légèrement saillie au-delà des faces extérieures des plaques de support ;
les joints toriques d'étanchéité (109) sont reçus dans des zones élargies radialement (103) au niveau desquelles les trous de réception (99) s'ouvrent vers les faces extérieures des plaques de support pour former des joints d'étanchéité au fluide avec les zones d'extrémité vitrifiées (107) ; et
des plaques de couverture (98) sont formées avec des trous de passage (112) correspondant à chaque position de structure de membrane et sont fixées aux plaques de support (96) au moyen de boulons (98) ;
les trous formés dans les plaques de couverture s'ouvrant vers les faces pleines par l'intermédiaire des zones radialement élargies (110) qui reçoivent les zones d'extrémité (107) des structures de membrane ;
les plaques de couverture (98) déformant les joints toriques d'étanchéité pour générer des forces de fermeture étanche ; et
les structures de membrane (105) étant directement en contact seulement avec les joints toriques d'étanchéité et ne touchant ni les trous (99) ni les plaques de couverture (98).

11. Procédé permettant d'éliminer de l'eau d'un liquide organique contenant de l'eau, lequel comprend le fait de faire s'écouler le liquide organique à travers un module tel que défini dans l'une quelconque des revendications 1 à 10, permettant à l'eau de s'écouler à travers les membranes dudit module et de récupérer à partir dudit module le liquide organique présentant une teneur en eau réduite.

12. Procédé selon la revendication 11, dans lequel le liquide organique est un alcool.

13. Procédé selon la revendication 12, dans lequel le liquide organique est de l'éthanol ou du butanol.

14. Procédé permettant de purifier de l'eau contenant un sel ou d'autres contaminants qui consiste à faire s'écouler l'eau à travers des conduits dans un module tel que défini selon l'une quelconque des revendications 1 à 10, et à récupérer l'eau qui s'est écoulée à travers les membranes dudit module et à travers les monolithes, l'eau récupérée présentant une conductivité de moins de 20 µSiemens/cm.
